Europäisches Patentamt

European Patent Office

Office européen des brevets

(11) Publication number: **0 532 154 A2**

## EUROPEAN PATENT APPLICATION

(21) Application number: 92305107.2

(22) Date of filing: 03.06.92

(51) Int. Cl.5: **C08G 63/90**, B29C 47/76

(30) Priority: **12.09.91 US 757923**

(43) Date of publication of application:
**17.03.93 Bulletin 93/11**

(84) Designated Contracting States:
**BE CH DE FR GB IT LI NL SE**

(71) Applicant: **NOVACOR CHEMICALS
(INTERNATIONAL) S.A.**

**Fribourg, Canton of Fribourg(CH)**

(72) Inventor: **Lunt, James**
**144 Braman Road**
**Sterling, Mass. 01564(US)**
Inventor: **Makuc, James M.**
**319 East Main Street, Apartment M-11**
**Marlborough, Mass. 01752(US)**
Inventor: **Castriotta, Michael**
**151 Oak Street**
**Clinton, Mass. 01510(US)**
Inventor: **Fridman, Israel David**
**69 Oak Avenue**
**Belmont, Mass. 02178(US)**
Inventor: **McQueen, James T.**
**130 Bryant Road**
**Jaffrey, New Hampshire 03452(US)**

(74) Representative: **Jukes, Herbert Lewis et al**
**Swann, Elt & Company 31 Beaumont Street**
**Oxford OX1 2NP (GB)**

(54) **Process for devolatilization of polylactides.**

(57) Biodegradable aliphatic polyesters may be devolatilized by passing them through a shear zone and concurrently applying a vacuum to them.

The present invention relates to the devolatilization of biodegradable polymers. More particularly the present invention relates to the devolatilization of biodegradable polymers of Formula I set forth below.

There is an increasing concern in society about solid waste disposal. Landfill sites are becoming a less acceptable way to dispose of waste. While polymers represent a relatively small proportion of waste in landfills, it is desirable to introduce polymers which need not be landfilled. Particularly, it is desirable to introduce biodegradable polymers into more conventional applications.

Biodegradable polymers have been known for some time. Many of these polymers have found only limited applications in the field of commodity plastics such as packaging for example, in shopping bags or garbage bags. Some of these polymers have found applications in the medical fields in biodegradable sutures and the like.

One drawback in producing such polymers are that the polymers become viscous as the conversion increases. From a practical point of view this tends to cause the polymerizations to be terminated at about 85 to 94% conversion. However, residual monomer levels of greater than about 5% tend to cause problems with the use of the polymer in many applications. In food grade applications, the FDA and other national agencies require low levels of residual monomer. Residual monomers may cause degradation of the polymer during processing. Residual monomer causes some problems with some types of processing such as sheet extrusion where residual monomer may plate out on the rolls.

WP 90/01521 published February 22, 1990, assigned to Battelle Memorial Institute discloses polymers of lactic acid which are plasticized with residual monomer. The residual monomer seems to range from 2 to 30% (page 18, line 34) to from 0.1 to 5% (page 64, lines 16 and 17). The disclosure teaches at page 18, lines 30 to 35 that the amount of plasticizing monomer is obtained by stopping the polymerisation to leave the required amount of residual monomer. There is no teaching in the patent application of any method other than conversion to control the residual monomer content in the resulting polymer.

The only art applicants aware of which discusses the possibility of devolatilizing such polymers is unpublished United States Patent Application Serial No. 659,567 filed February 22, 1991, assigned to Polysar Financial Services S.A. (subsequently renamed as Novacor Chemicals International S.A.). The patent application deals with a continuous process to polymerize lactic acid. In the passage bridging pages 10 and 11, the devolatilization of the polymer is discussed. The main thrust of the disclosure is to use a falling strand devolatilizer. However, lines 3 to 6, at page 11 propose that an extruder might be used to devolatilize the polymer. No details of such use are disclosed.

There is a need for a commercially operable process to control the residual monomer level in biodegradable polymers.

The present invention provides a process to reduce the residual monomer content to less than 5 weight % in a polymer comprising one or more monomers of the formula:

$$-OCR_1 R_2 (CR_3 R_4)_n CO- \qquad I$$

wherein in formula I $R_1$, $R_2$, $R_3$, and $R_4$ are independently selected from a hydrogen atom and a $C_{1-4}$ alkyl radical, and n is 0 or an integer from 1 to 5, characterised by passing the polymer through a shear zone, said shear zone having at least one vacuum port, said polymer being at a temperature from the melting temperature of the polymer up to 250°C, and applying a vacuum of not greater than 750 mm of Hg.

Biodegradably polymers can be polyesters of hydroxy substituted carboxylic acids. The two most widely known biodegradable polymers of this type are the glycolides and the lactides. If a compound of Formula I is a homopolymer and n is 0 and $R_1$ and $R_2$ are both hydrogen, the polymer would be a poly glycolide. If one of $R_1$ and $R_2$ is a methyl radical and the other is a hydrogen atom, the polymer would be poly lactic acid. In the above case the monomers to be removed from the polymer would be glycolic acid or glycolide, or lactic acid or lactide, respectively.

The shear zone may be generated in either a vented molding machine, such as an injection molder, or it may be an extruder, such as a twin or single screw extruder. The operation of the extruder and vented molding machine are similar. There may be relatively minor differences in temperatures and screw speed operation, but these differences are within the ordinary skill in this art field. For the sake of convenience, the present invention will be described in the context of an extruder. However, it should be born in mind that an injection molder having a vacuum port is also useful in the present invention. The primary difference is that the extruder operates in a continuous manner and the injection molder operates in a discontinuous manner.

An extruder useful in accordance with the present invention may be any extruder having vacuum ports. The extruder may be a twin or single, preferably twin, screw extruder. If the extruder is a twin screw extruder it may be operated in co- or counter-rotating mode. Preferably the extruder is operated in a counter-rotating mode. The extruder may have a L/D ratio for the screw from 20:1 to 45:1, preferably 24:1 to 40:1.

The extruder will have a number of zones along the barrel section. The zones may be heated at temperatures from the melting temperature of the polymer up to 250°C, generally from 150 to 220°C, preferably from 160 to 185°C. Typically, the extruder may have from 5 to 10 zones within the barrel which are heated to one or more temperatures. For example, a suitable temperature profile for the zones within the barrel of a twin screw extruder operating in a counter-rotating mode at 100 RPM's having two vacuum ports operated at less than 750 mm of Hg for the devolatilization of polylactic acid could be as follows: 160, 180, 200, 220 (several zones), 165, and 150°C. The temperature profile used in the barrel will depend on the extruder type and the other operating conditions.

The extruder may be operated at screw speeds from 40 to 300, preferably from 50 to 200 RPM's.

It is important that the extruder have at least one, preferably two or more, vacuum ports. The vacuum ports should be operated at a vacuum of less than about 750 mm of Hg, preferably as low a vacuum as practically possible to minimize polymer degradation. The lines from the vacuum ports to the vacuum source should be heated. Generally, the monomers used to make the polymers are solid at about room temperature. Thus, if the lines are not heated the monomer may solidify in the line and render the vacuum line useless. Preferably, there is a low temperature trap in the vacuum line before the source of vacuum. To assist in the removal of residual monomer carrier gasses such as nitrogen or carbon dioxide may be incorporated or injected into the polymer melt. The incorporation of water into the polymer melt is not desirable.

Generally, the extruder will be operated to produce a residual monomer content of less than 5, more preferably less than 2, most preferably less than about 0.5 weight % of residual monomer. The polymer may, if necessary be passed through the extruder more than once. However, it is desirable to try to minimize the number of passes through the extruder to minimize costs and the potential for polymer degradation.

In a preferred embodiment from about 0.1 to 5, most preferably from 0.4 to 3, weight % of one or more antioxidants, or heat and light stabilizers may be added to the polymer prior to devolatilization. This has two benefits: it tends to reduce polymer degradation and, particularly, minimizes reduction in the intrinsic viscosity (molecular weight) of the polymer during devolatilization and it obviates the need for a second pass through the extruder to add such materials.

The polymer is preferably dried prior to devolatilization. That is, the polymer may be left in a drying oven at temperature from about 100 to 110°F for about 10, preferably front 4 to 6 hours, prior to devolatilization. The present invention will now be illustrated by the following non-limiting examples. In the examples, unless otherwise specified % is weight % and parts are parts by weight.

**Example 1**

Polymer preparation:

- Lactide monomer was polymerized in the presence of stannous octoate in accordance with known techniques such as those described in the above-noted WP 90/01521 or the continuous process described in copending United States patent application serial number 659,567. Various batches and blends of batches of polylactic acid were prepared having a residual monomer content ranging from about 20% to about 5% (as determined by thermal gravametric analysis (TGA)).

The batches of polymer used in the examples had the following properties.

| Batch | Monomer Composition | Intrinsic Viscosity dl/gm | Residual Monomer % |
|---|---|---|---|
| 1 | 80% L, 20% DL | 2.4 | 20.2 |
| 2 | 80% L, 20% DL | 0.95 | 5.1 |
| 3 | 20% L, 80% DL | 0.82 | 11.9 |
| 4 | 20% L, 80% DL | 0.87 | 8.5 |
| 5 | 20% L, 80% DL | 0.81 | 6.4% |

The above polymers were passed through a Leistritz twin screw extruder having a 34 mm screw operating at either 50 or 100 RPM's in a counter-rotating mode. The extruder had two vacuum ports operated at about 735 mm of Hg. In the second run (Table 2), the vacuum lines were heated and double traps were installed in the line before the vacuum pump.

The operating conditions and the results of the two devolatilization runs are set forth in Tables 1 and 2, respectively.

## TABLE 1

| Batch | RPM | Processing Temps. | % Ultranox 626 Added | Residual Monomer Before Extrusion | Residual Monomer After Extrusion | I.V. dl/g Before Extrusion | I.V. d/lg After Extrusion |
|---|---|---|---|---|---|---|---|
| 1 | 50 | 150°C | 0.4 | | | | |
| 1 | 50 | 170°C | 0.4 | ~20% | 3.3% | | |
| 1 | 50 | 210°C | 0.4 | | | | |
| 1 | 100 | 210°C | 0.4 | ~20% | 1.7% | 2.4 | 2.2 |
| 2 | 50 | 180°C | | | | 0.95 | 0.77 |
| 2 | 100 | 180°C | | | | | |
| 2 | 50 | 180°C | 0.4 | | | 0.95 | 0.93 |
| 2 | 100 | 180°C | 0.4 | | | | |
| 2 | 50 | 220°C | | | | | |
| 2 | 100 | 220°C | 0.4 | | | | |
| 2 | 50 | 220°C | 0.4 | 5.1% | 0.5% | | |
| 2 | 100 | 220°C | 0.4 | | | | |

All material vacuum oven dried.

## TABLE 2

| Batch | RPM | Process Temp. °C | % Ultranox 626 | Residual Monomer Before Extrusion | Residual Monomer After Extrusion | I.V. dl/g Before Extrusion | I.V. dl/g After Extrusion |
|---|---|---|---|---|---|---|---|
| Batch 3 2nd Pass | 100 | 3 | 0.4 | 11.9% | 5.0% | | |
| Batch 4 | 100 | 2 | 0.4 | 8.5% | 5.7% | | |
| Batch 4 Vacuum Dried | 100 | 3 | 0.4 | 8.5% | 4.4% | 0.87 | 0.87 |
| Batch 5 | 100 | 2 | 0.4 | 6.4% | 4.5% | 0.81 | 0.78 |
| Batch 5 | 100 | 2 | 0.4 | 6.4% | 3.5% | | |
| Batch 5 2nd Pass | 100 | 3 | 0.4 | 4.5% | 3.1% | | |
| Batch 5 2nd Pass | 100 | 2 | 0.4 | 4.5% | 2.7% | | |

1 - 160, 170, 170, 180, 180, 180, 180, 170 feed to die

2 - 160, 185, 185, 180, 185, 185, 180, 155, 150 feed to die

3 - 160, 180, 200, 220, 220, 220, 220, 165, 150 feed to die

All of the material specified in Table 2 was dried in a desiccating oven at 105°F unless specified otherwise.

The above data shows the usefulness of using an extruder to reduce and/or control the level of residual monomer in a biodegradable polymer.

5

In the present application's disclosure of the present invention, any numerical value includes the precise value and any value "about" or "essentially" or "substantially" the same as the precise value. The wording of the appended claims and abstract is incorporated into the present description.

## Claims

1. A process to reduce the residual monomer content to less than 5 weight % in a polymer comprising one or more monomers of the Formula:

   $-OCR_1R_2(CR_3R_4)_nCO-$      I

   wherein in Formula I, $R_1$, $R_2$, $R_3$ and $R_4$ are independently selected from a hydrogen atom and a $C_{1-4}$ alkyl radical, and n is 0 or an integer from 1 to 5, characterised by passing the polymer through a shear zone, said shear zone having at least one vacuum port, said polymer being at a temperature from the melting temperature of the polymer up to 250°C, and applying a vacuum of not greater than 750 mm of Hg to at least one vacuum port.

2. A proccss according to claim 1, characterised by said shear zone comprises an injection molding machine or an extruder.

3. The process according to claim 2, characterised by said extruder is a twin screw extruder.

4. The process according to claim 3, characterised by said twin screw extruder is operated in counter-rotating mode.

5. The process according to claim 4, characterised by said extruder has at least two vacuum ports.

6. The process according to claim 5, characterised by said vacuum ports are operated at vacuums of not more than 735 mm of Hg.

7. The process according to claim 6, characterised by the lines from said vacuum port to the source of vacuum are heated at a temperature above the highest melting temperature of residual monomer and have traps prior to the vacuum source.

8. The process according to claim 6, characterised by the screws in said extruder are operated at a rate from 4 to 300 RPM's.

9. The process according to claim 6, characterised by the screws in said extruder are operated at a rate from 50 to 200 RPM's.

10. The process according to claim 9, characterised by the zones in the barrel of said extruder are heated to temperatures from 150 to 220°C.

11. The process according to claim 10, characterised by said extruder is a twin screw extruder and is operated in a counter-rotating mode.

12. The process according to claim 10, characterised by said extruder is a twin screw extruder and is operated in a co-rotating mode.

13. The process according to claim 11, characterised by the residual monomer is reduced to less than 2 weight %.

14. The process according to claim 12, characterised by the residual monomer is reduced to less than 2 weight %.

15. The process according to claim 13, characterised by further comprising adding to said monomer from 0.1 to 5 weight % of one or more of antioxidants and heat and light stabilizers prior to passing said polymer through said extruder.

**16.** The process according to claim 14, characterised by further comprising adding to said monomer from 0.1 to 5 weight % of one or more of antioxidants and heat and light stabilizers prior to passing said polymer through said extruder.

**17.** The process according to claim 15, characterised by said polymer is a homopolymer of Formula I, wherein n is 0 and one of $R_1$, and $R_2$ is a methyl radical and the other is hydrogen.

**18.** The process according to claim 16, characterised by said polymer is a homopolymer of Formula I, wherein n is 0 and one of $R_1$, and $R_2$ is a methyl radical and the other is hydrogen.

**19.** The process according to Claim 1, characterised by further comprising a injecting a monomer entraining gas into the polymer melt in the extruder.

**20.** The process according to Claim 7, characterised by further comprising a injecting a monomer entraining gas into the polymer melt in the extruder.

**21.** The process according to Claim 13, characterised by further comprising a injecting a monomer entraining gas into the polymer melt in the extruder.

**22.** The process according to Claim 14, characterised by further comprising a injecting a monomer entraining gas into the polymer melt in the extruder.

**23.** A polymer, characterised by being provided by a process according to any one of claims 1 to 22.